# EUROPEAN PATENT SPECIFICATION

(11) **EP 1 975 837 B1**
(45) Date of publication and mention of the grant of the patent: **31.10.2018**
(21) Application number: 08251241.9
(22) Date of filing: 31.03.2008
(51) Int. Cl.: G06F 21/10, G06F 21/42

(54) **Non-repudiation for digital content delivery**
Unleugbarkeit für die Bereitstellung digitaler Inhalte
Non répudiation pour la livraison de contenu numérique

(30) Priority: 30.03.2007 US 731325
(43) Date of publication of application: 01.10.2008
(73) Proprietor: Accenture Global Services Limited, Dublin 4 (IE)
(72) Inventor: Levine, Richard B., Massachusetts 02648 (US)
(74) Representative: Boult Wade Tennant LLP

(56) References cited:
- EP-A- 1 065 634
- EP-A- 1 107 089
- EP-A- 1 161 055
- WO-A-01/17310
- WO-A-01/54438
- WO-A-01/80525
- US-A1- 2002 099 663
- US-A1- 2002 138 435
- US-A1- 2003 123 853
- US-A1- 2004 188 520
- US-A1- 2006 107 037
- US-A1- 2006 271 791

## Description

### BACKGROUND

### 1. Technical Field.

The present invention relates to digital rights management. Specifically, the invention relates to systems and methods for incontrovertibly authenticating the identity of remote users to ensure that digital content is delivered only to authorized persons in a manner that may not be repudiated by the recipient.

### 2. Background Information

Delivering digital content to remote users over a network can be a profitable endeavor. However, determining whether the recipient of digital content is an individual authorized to receive the content is a significant challenge. In some cases, content providers may employ hardware solutions to authenticate requests for digital content For example, cable TV providers often employ a "set-top box" for delivering television content to a subscriber's home. The set-top box is installed in the subscriber's home, and television content is delivered to the set-top box. These devices contain some degree of protection in the form of unique identification methods for identifying individual set-top boxes. However, most of these methods may be defeated by those attempting to gain access to content without paying for it. Content providers typically lose large amounts of revenue to unauthorized consumers. Most content providers have had to accept such losses simply as a cost of doing business.

In addition to the losses sustained due to unauthorized access to content, content providers also lose large amounts of money to billing disputes with legitimate subscribers. In many case such disputes arise when customers deny having given authorization for particular services. For example, a content provider may offer a "Pay-Per-View" service wherein a subscriber may purchase particular content on demand, and pay a fixed fee for receiving the content. The content provider receives a request form the subscriber authorizing the purchase of the "Pay-Per-View" content and the content provider delivers the content via the subscriber's set-top-box. If the subscriber later claims not to have authorized the transaction, it may be difficult for the content provider to prove that the original request was legitimate.

Some potential subscribers may be hesitant to use paid digital content delivery services due to concerns about privacy, the possibility of being charged for services they did not request, or other concerns. A system that meets potential subscribers' privacy and security needs may increase the number of actual subscribers using and paying for a content provider's services.

An additional problem with security and identification measures that rely on identification of the terminal from which a request for content is received or to which content is to be delivered is that it hinders the consumption of content. Often subscribers would consume more content if they had greater flexibility regarding where and when and on which device they may access digital content. By verifying the identity of a particular hardware device, subscribers are typically limited to accessing digital content via that particular device. Such restrictions tend to limit the amount of digital content consumed, and tend to limit the content provider's profit.

Accordingly, improved systems and methods for managing access to digital content are desirable. An improved digital rights management program should accurately identify an end user and confirm that the end user is in fact authorized to receive the requested digital content before the content is delivered. Furthermore, authentication of the end user must be conducted in a manner that may not be repudiated by the user in the case of a billing dispute in which the user denies requesting the service. Finally, an improved digital rights management program will preferably allow a consumer of digital content to receive the requested content on substantially any device designated by the consumer capable of receiving and displaying the content.

US-A1-2002/0138435 relates to a method and system for content delivery control using a parallel network. When a request for content delivery is received from a data communications device by a content provider, an authentication server verifies the identity of the requesting party and its right to receive the requested content. If successful, a transaction indicia is generated and conveyed to the requesting party via a call connection to the requesting party's telephone. The requesting party then forwards the transaction indicia to the content provider using the data communications device, in order to obtain delivery of the requested content.

### BRIEF SUMMARY

The present disclosure relates to digital rights management. The various embodiments of the invention allow a provider of digital content to authenticate the identity of a remote user requesting digital content. Authentication of the user's identity may be performed in an incontrovertible manner such that the user may not repudiate the transaction. Authentication may be distributed across multiple communication channels or systems to further ensure the accuracy user authentication. Furthermore, user authentication may be performed in a manner that safeguards the user's privacy.

According to a first aspect of the invention, there is provided a non-repudiation system for facilitating secure delivery of digital content to a remote user over a network, as set out in claim 1.

According to a second aspect of the invention, there is provided a method of recording a network transaction, as set out in claim 11.

Other systems, methods, features and advantages of the invention will be, or will become apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

Fig. 1 is a block diagram showing a digital rights management system;
Fig. 2 is a block diagram showing a digital rights management system including multiple inter/terminal devices for interacting with a digital content provider;
Fig. 3 is a block diagram showing a digital content provider with an independent third party authenticator; and
Fig. 4 is a block diagram showing a digital rights management system including a second communication channel for confirming a user request for digital content.

### DETAILED DESCRIPTION OF THE DRAWINGS AND THE PRESENTLY PREFERRED EMBODIMENTS

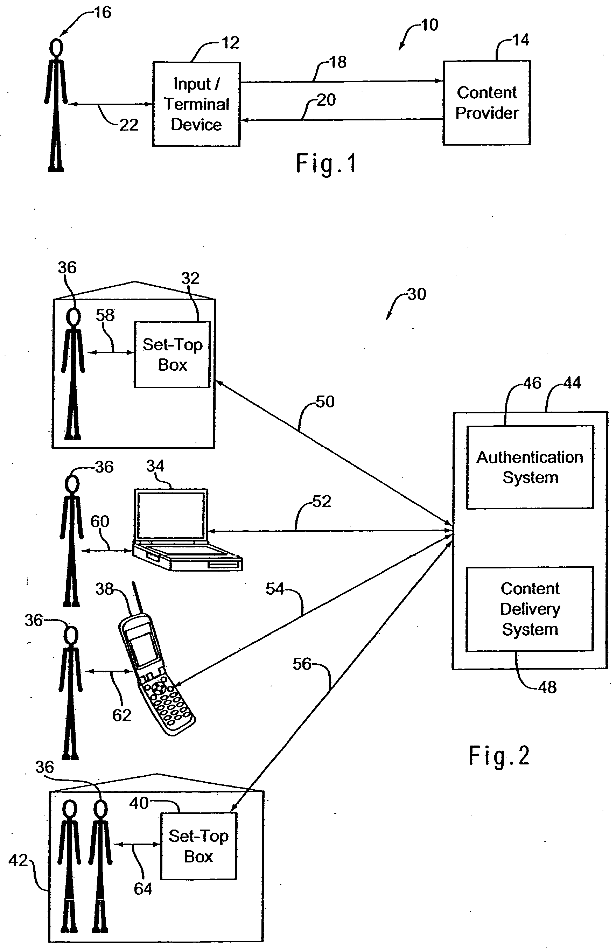

According to various embodiments of the present invention, transaction non-repudiation is based on authentication of the identity of the user requesting digital content rather than authentication of the physical device to which digital content is to be sent. Fig. 1 is a simplified block diagram of a digital rights management system 10. A user 16 accesses an input/terminal device 12 to request digital content from a content provider 14. The input/terminal device 12 may be, for example, a set-top box for providing broadband cable television content to be displayed on the user's television set. In this case, the set-top box may be considered an input/terminal device 12 in that the user 16 interacts with the set-top box in order to send commands and data to the content provider 14, and the content provider 14 sends the requested digital content back to the set-top box for display on the user's television set Alternatively, the input/terminal device may be a computer, a mobile telephone, a personal digital assistant (PDA), a wireless email terminal, or any other device capable of receiving digital and interacting with a digital content provider.

In the traditional non-repudiation scenario, the content provider 14 authenticates the input/terminal device 12, to ensure that the input/terminal device 12 is a device authorized to receive the requested content. Typically, a unique identifier is embedded within the input/terminal device 12. The content provider 14 interrogates the input/terminal device 12 to receive the unique identifier associated with the device. The content provider evaluates the unique identifier to determine the identity of the terminal device and decides whether the device is authorized to receive the requested content. If so, the content provider 14 delivers the content regardless who the user at the other end of the line happens to be.

A problem with authenticating the terminal device 12 is that the unique identifier embodied within the input/terminal device 12 may be discoverable. Unscrupulous users may clone input terminal devices 12 such that imposters may be authenticated as valid devices, and content may be delivered to unauthorized users. Furthermore, users who may in fact be authorized to receive certain content will be restricted to receiving their requested content on the particular input/terminal device 12 that has been authenticated by the content provider, and not on others. This significantly reduces the times and places at which users may consume digital content. This in turn tends to limit the overall amount of content users consume. In order to sell more content, it is in the content provider's interest to increase the user's options regarding where and how digital content is delivered. However, this must be accomplished in a manner that ensures content is delivered to authorize users only.

According to various embodiments described in the present disclosure, the authentication process is pushed further downstream in the content delivery process to the point where the identity of the actual user requesting digital content is authenticated rather than a particular terminal device. Authenticating the user provides much greater flexibility in the manner in which digital content may be delivered, and how the user may access digital content. Authenticating the user may also provide additional protections for maintaining the anonymity of the user's identity and the privacy of the user's transactions with the content provider.

Returning to Fig. 1, when the user 16 requests content from the content provider 14, the content provider 14 causes the input/terminal device 12 to prompt the user for proof of identity. The user interacts with the input/terminal device 12 to enter a unique identifier sufficient to prove the identity of the user to the content provider. The unique identifier may take on any of a number of different forms ranging from a simple user name and password, a personal identification number (PIN), the answer to a predefined security question that only the legitimate user would know, a secure token or other coded numeric or alphanumeric string (e.g. RSA secure ID token), to biometric data such as a fingerprint, a retinal scan, voice print, EEG or EKG, DNA, gestural, speech pattern, or the like. For an additional layer of security, multi-factor authentication may be required wherein a user must enter multiple identifiers. The unique identifier may be entered using a keypad such as the keypad on a set-top box remote control unit, a computer keyboard, a fingerprint touch scanner, a retinal scanning device, a microphone, or any other input device appropriate for receiving data corresponding to the particular security measures implemented to identify the user. The robustness of the security measures used to identify the user will depend on the content provider. In general, there may be competing interests between ease of use and the certainty of the identification. The content provider may want to strike a balance between security measures that are not so onerous that they discourage use while at the same time achieving a sufficient level of certainty regarding the identity of the user, before sending the requested content.

According to an embodiment, the unique identifier is sent from the input/terminal device 12 to the content provider 14, as indicated by the arrow 18, for remote authentication of the user's identity. The content provider 14 may use a computational security system to authenticate the user in order to verify the transaction in a manner that may not be repudiated by the user if a billing dispute arises, or if the user denies requesting the particular content Once the user is authenticated, the digital content may be delivered to the input/terminal device 12, as indicated by the arrow 20.

In an alternative embodiment, authentication may be performed at the input/terminal device 12. Rather than sending the unique identifier to the content provider 14 as shown, the input/terminal device 12 may store authentication data, and may compare the authentication data entered by the user with that stored on the device. When the input/terminal device verifies the identity of the user, the input/terminal device may simply send a confirmation message to the content provider 14 indicating that the user has been authenticated and that it is safe for the content provider to send the requested content.

Authenticating the user as opposed to the terminal device opens many new opportunities for delivering content to users in a more flexible non-device specific manner. For example, Fig. 2 shows a variety of terminal devices over which a user 36 may wish to receive digital content. A first input/terminal device 32 may be a traditional set-top box located in the user's home, similar to that already described. The user may also have a portable lap top computer 34 with which the user may wish to receive digital content over a wireless internet connection or the like. The user 36 may also have a cell phone 38 adapted to receive digital content. Finally, the user 36 may travel to a friend's home, or to a hotel, or to some other location that has a set-top box or similar input/terminal device 40, over which the user may wish to access digital content. In all cases, the user 36 may contact a content provider 44 to request delivery of digital content to whichever input/terminal device the user happens to be using or plans to be using at a particular time. The content provider 44 may instruct the appropriate input/terminal device, be it the user's in-home set-top box 32, his or her laptop computer 34 or cell phone 38, or the user's friend's or the hotel's set-top box 40, to prompt the user for authentication data. The user 36 interacts with his or her home set-top box 32, with the laptop computer 34, with the cell phone 38, or with his or her friend's or the hotel's set-top box 40, to enter a unique identifier that proves the identity of the user with sufficient certainty to satisfy the content provider. The input/terminal device that receives the authentication data forwards the authentication data to the content provider 44. The content provider 44 includes an authentication system 46 for verifying the user's identity, and a content delivery system 48 for delivering the digital content to the user 36 over the appropriate transmission medium for delivering content to the designated device. Once the authentication system 46 determines that the user is who he or she says she is, and that the identified user is authorized to receive the requested content, the content delivery system may begin delivering content to the terminal device designated by the user.

By authenticating the user rather than the terminal device, the content provider has many more opportunities to deliver content to the user. This may have the likely result that the user will consume more content, resulting in greater profit for the content provider. By way of example, suppose the user 36 has one hour free before leaving for the airport to travel to another city. One hour may not be enough time for the user to watch the latest full length feature film he or she has been interested in seeing. However, if the user 36 knows that he or she may continue watching the film at another location when he or she reaches his or her destination, or if the user can access and watch part of the film enroute, the user may elect to purchase the content (i.e. the right to watch the film) and begin watching it at home before leaving on his or her trip. When it comes time to leave, the user may stop playing the film from his or her set-top box 32. The user may again access the film from his or her laptop computer 34 while on the plane traveling to his or her destination, or the user may access the film from a set-top box at his or her hotel. In either case, the input/terminal device, either the user's laptop computer 34 or the set-top box 40 at the hotel, may prompt the user for his or her identity. The user may respond by entering the appropriate unique identifier as has already been described. The identifier may then be sent to the content provider 44 for authentication. Upon verifying the identity of the user, the content provider may continue sending the digital content to the new device, and the user 36 may continue watching the film at the new location. In this case, the ability to watch the film at different locations at different times allows the user to consume digital content that he or she would otherwise not have had time for.

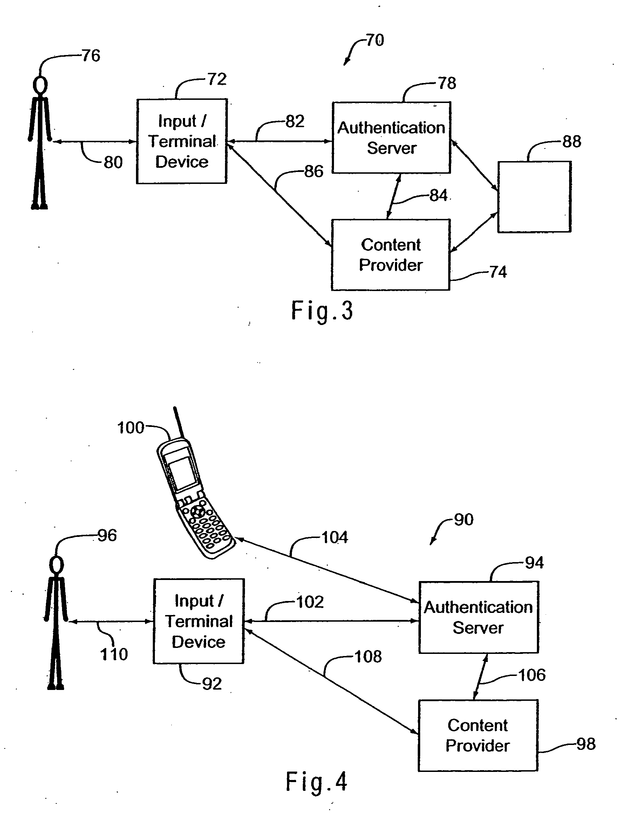

Another embodiment of a digital rights management system 70 adapted to authenticate the user rather than the terminal device is shown in Fig. 3. In this embodiment, the identity of the user is anonymized, in order to protect the user's privacy. According to the digital rights management system 70, the user 76 interacts with an input/terminal device 72 as has already been described. The user 76 requests data from the content provider 74. However, the user's request need not necessarily identify the user, only the device address from which the request is received. The content provider 74 interacts with an authentication server 78 operated by an independent but trusted third party, as indicated by the arrow 84. The third party operating the authentication server 78 is trusted by both the user 76 and the content provider 74. On the user's side, the user trusts the third party to maintain the user's anonymity. For, although the authentication server 78 is adapted to authenticate the user by determining that the user is in fact who he or she says they are, the authentication server 78 does not disclose the user's identity to the content provider 74. The third party authenticator 78 is trusted by the content provider 74 to provide incontrovertible proof that content is requested by and is being delivered to the user and that the user requesting the content is in fact who he or she says they are, and to guarantee that the content provider will be paid for the content.

Upon receiving a request for content from the user 76, the content provider 74 sends a massage to the authentication server 78 requesting that the authentication server 78 authenticate the user 76. The authentication request need not identify the content requested by user 76. Instead, the authentication server 78 may simply verify that the user 76 is an active subscriber of the content provider 74, or that the user is entitled to access a certain class of digital content to which the requested content belongs, of the authentication server 78 may rely on some other means of determining whether the user 76 is entitled to receive the requested content without the specific content being named.

In response to the authentication request from the content provider 74, the authentication server 78 communicates with the input/terminal device 72, requesting the input/terminal device 72 to prompt the user 76 to enter authentication data proving the user's identity. The input/terminal device 72 receives authentication data in the form of a unique identifier from the user as has already been described. The input/terminal device 72 forwards the user's unique identifier to the authentication server 78. The authentication server 78 authenticates the user and records the transaction. Upon authenticating the user, and determining that the user is entitled to receive the requested content, the authentication server sends an authorization message to the content provider 74 indicating that the user 76 is entitled to receive the requested content. The content provider 74 may then begin sending the digital content to the particular device that the user 76 has requested the content be sent to.

In this arrangement, the identity of the user 76 may be shielded from the content provider 74 and the content requested by the user 76 may be shielded from the third party authenticator 78. The user's identity can be authenticated and tied incontrovertibly to the user's contract and billing agreements to ensure that the user is responsible for paying for the content. However, this is done in a way that the user's identity is abstracted from the transaction and the user's privacy is not compromised. The digital rights management system provides for the secure authentication of the user's identity for purposes of digital content consumption without providing the user's personal information to any of the parties to the transaction. A service unit 88 may be responsible for collecting payment from the user 76. Furthermore, even the final payment process may be abstracted through a third party payment interface, or through a credit card pre-payment verification process.

The service unit 88 may be configured to provide services such as billing, auditing, verification of contract compliance, and/or other services. In one embodiment, the service unit 88 may remediate, reconcile, bill, and/or processes fees or charges through generated by any component of the digital rights management system 70. The service unit 88 may account for digital content usage and/or apply business rules or protocols related to digital content usage. The service unit 8 8 may calculate, track, and/or monitor the flow of fees between components of the system 70 or between components of the system 70 and third party systems or entities. For example, the service unit 88 may calculate, track, and/or monitor the flow of fees between a user 76 and the content provider 74, between the content provider 74 and the authentication server 78, to an intellectual property owner of the digital content, and/or between other components of the system 70 or third-party components and entities.

For example, in a credit card pre-payment process the authentication server 78 may store the user's credit card information for charging the user 76paying for digital content as it is consumed. Alternatively, the user may establish a pre-paid account with the third party authenticator 78. Charges for consuming digital content may be charged directly against the prepaid account. In this case, when the user 76 requests content from the content provider 74, the content provider 74 need only communicate the address of the device from which the request is received and the price associated with the requested content to the authentication server 78. The authentication server 78 may then instruct the designated device to prompt the user for his or her unique identifier, as has been described, and the authentication server may then verify the user's identity. The authentication server 78 may also bill the user's credit card or prepaid account the amount specified by the content provider 74. Upon authenticating the user, the authentication server 78 sends an authorization message to the content provider, and the content provider may begin delivering content to the designated device. The third party authenticator 78 reimburses the content provider 74 for the price of the content. Thus, the identity of the user 76, and the nature of the content requested from the content provider 74 are never revealed to the same entity, thereby protecting the user's privacy, while ensuring that the user is entitled to the requested content, and ensuring that the content provider 74 will be compensated for providing the content.

Fig. 4 shows another embodiment of a digital rights management system 90. The digital rights management system 90 is similar to that shown in Fig. 3, in that a user 96 interacts with an input/terminal device 92 to request digital content from a digital content provider 98. A trusted third party operates an authentication server 94. The digital rights management System 90 adds an additional layer of authentication security by communicating with the user over a second communication channel independent of the communication channel over which the digital content is to be delivered and over which a first level of authentication security is provided. In the embodiment illustrated in Fig. 4, the user 96 enters authentication data such as a user name and password, a unique code, biometric data, or the like, into the input/terminal device 92. As with the previous embodiment, the authentication data are forwarded to an authentication server 94 which analyzes the received authentication data and determines whether the user is authorized to receive the requested content Having identified the user 96, the authentication server 94 contacts the user 96 over a separate communications channel. For example, the authentication server 94 may contact the user 96 and request confirmation at a communication device that is different from the input/terminal device 92 through which the user 96 originally requested the digital content.

In one embodiment, the user 96 may request digital content via the input/terminal device 92, such as a set-top box, and the authentication server 94 may send an SMS text message to the user's cell phone 100. The text message may ask the user to confirm that the user has in fact requested the content in the user's original request. Upon receiving a confirmation SMS text message from the user, the authentication server 94 may instruct the content provider to send the digital content to the input/terminal device 92 specified by the user 96.

By communicating directly with the user 96 over a separate communication channel, the authentication server may add a new level of security to the authentication process. It may be possible for an unscrupulous user trying to access digital content under false pretenses to spoof either the user's input/terminal device 92 or the user's cell phone 100 individually: However, in order to successfully access the digital content, the unscrupulous user must overcome two independent security systems. This is much less likely and provides an additional layer of confidence to the content provider that the digital content is being sent to the appropriate, authorized user 96.

From the foregoing, it can be seen that the present invention provides improved digital rights management services at least by augmenting the security measures and privacy associated with requesting and delivering digital content. In some embodiments, the present invention may accordingly not require the use of digital signatures, public or private key encryption, time stamping, and/or other protocols for authenticating a user.

The systems, methods and apparatuses for non-repudiating the user or subscriber of digital content may be embodied in many different forms, formats, and designs, and should not be construed as limited to the exemplary embodiments set forth above. One or more devices, distributed networks, apparatuses, methods, processes, data processing systems, or software products may be provided to perform the authentication and non-repudiation processes for the secure delivery of digital content. Embodiments may take the form of electronic hardware, computer software, firmware, including object and/or source code, distributed networks and/or combinations thereof. A system for the non-repudiation of the delivery of digital content may be stored on a computer-readable medium installed on, deployed by, resident on, invoked by and/or used by one or more data processors, computers, clients, servers, gateways, or a network of computers, or any combination thereof. The computers, processors, servers, gateways, may have a controller capable of carrying out instructions embodied as computer software. A system for non-repudiation for delivery of digital content may be implemented using any existing software platform or frameworks or combination of software platforms and frameworks, whether known or proprietary, including basic, visual basic, C, C+, C++, J2EE™, Oracle 9i, XML, API based designs, and like component-based software.

A system for the non-repudiation of the delivery of digital content may include an electronic device that electronically communicates with a digital content service provider. The electronic device may communicate with the service provider via wireless communication, a wired connection or network, or a combination of wireless and wired connections. The communication may be carried out over a direct link between the device and the service provider, or over a distributed network of routers, processors, controllers, servers and the like. The electronic device may be a handheld portable, or a stationary device.

The electronic device may be a computing device having a programmable controller, processor and/or other electronic components that carry out instructions according to a computer program stored on a computer-readable storage medium, such as a memory, hard disk, CD-ROM, optical storage device, magnetic storage device and/or combinations thereof of the handheld device. For example the electronic device may be a personal computer, laptop or handheld computer, tablet pc and like computing devices having a user interface. The electronic device may be a dedicated function device such as a personal communications device, a portable or desktop telephone, a personal digital assistant ("PDA"), a remote control device, a digital music and/or video receiver, a vehicle information and entertainment system, or similar electronic devices. Alternatively, the electronic device may be a home, business or commercial appliance or other equipment The electronic device may be a stand-alone device or the device may be integrated with one or more other devices:

While various embodiments of the invention have been described, it will be apparent to those of ordinary skill in the art that many more embodiments and implementations are possible within the scope of the invention. Accordingly, the invention is not to be restricted except in light of the attached claims.

## Claims

1. A non-repudiation system for facilitating secure delivery of digital content to a remote user over a network, the system comprising:
a content server (74, 98) adapted to receive a request for digital content from the user and adapted to deliver digital content requested by the user to a remote device over the network;
an input device (72, 92) adapted to receive user authentication data uniquely identifying the user; and
an authentication server (78, 94) adapted to receive the user authentication data from the input device for verifying the user's identity and determining whether the user is authorized to receive the requested digital content, upon verifying the user's identity and determining that the user is authorized to receive the requested digital content, the authentication server adapted to send an authorization message to the content server to instruct the content server to deliver the requested content to the remote device,
wherein the content server is adapted to send an authentication request to the authentication server in response to receiving the request for digital content from the user, and the authentication server is adapted to send an input request to the input device in response to receiving the authentication request from the content server, the input request prompting the user to input the user authentication data;
**characterised in that** the authorization message does not disclose the identity of the user requesting the content such that the authentication server is configured to shield the user's identity from the content server, and
the authentication request does not identify the content requested by the user such that the content server is adapted to shield the requested digital content from the authentication server (78, 94).

2. The non-repudiation system of Claim 1 further comprising a service unit (88) for charging the user for the digital content delivered to the remote device.

3. The non-repudiation system of Claim 2 wherein the authentication server (78, 94) is adapted to forward the user's identity to the service unit (88), and the content server (74, 98) is adapted to forward a transaction identifier associated with the content delivered to the user to the service unit, and the service unit is adapted to prepare a bill charging the user identified by the authentication server for the digital content associated with the transaction identifier provided by the content server.

4. The system of Claim 1 wherein the input device adapted to receive user authentication data and the remote device to which the content provider delivers digital content comprise a combined input/terminal device (72, 92).

5. The system of Claim 4 wherein the combined input/terminal device (72, 92) comprises one of a set-top box for receiving a broadband television signal, a mobile telephone; a wireless email terminal; or a personal digital assistant.

6. The system of Claim 1 wherein the user authentication data uniquely identifying the user comprises a user name and password.

7. The system of Claim 1 wherein the user authentication data comprises biometric data.

8. The system of Claim 7 wherein the biometric data comprises at least one of a fingerprint scan, or a retinal scan.

9. The system of Claim 1 wherein the user authentication data comprises a unique code identifying the user.

10. The system of Claim 9 wherein the unique code is provided by a secure token.

11. A method of recording a network transaction in which digital content requested by a user is delivered to a terminal device (72, 92) designated by the user such that the user's request may not be repudiated by the user, the method comprising:
receiving, at a content server (98) adapted to deliver digital content to the user, a request for content from the user;
in response to receiving the request for content, sending an authentication request from the content server to an authentication server;
in response to receiving the authentication request, sending an input request from the authentication server to an input device, prompting the user to input authentication data uniquely identifying the user;
receiving at the authentication server the authentication data uniquely identifying the user over a first communication channel (102, 108);
verifying at the authentication server (78, 94) that the user is authorized to receive the requested digital content based on the received authentication data;
confirming the request with the user over a second communication channel (104);
in response to verifying that the user is authorized to receive the digital content, sending an authorization message to the content server to instruct the content server to deliver the requested digital content over the network to the terminal device designated by the user;
**characterised in that**:
the authorization message does not disclose the identity of the user requesting the content such that the authentication server shields the user's identity from the content server (98); and
the authentication request does not identify the content requested by the user, such that the content server shields the requested digital content from the authentication server (78, 94).

12. The method of Claim 11 wherein receiving authentication data uniquely identifying the user comprises receiving a user name and password.

13. The method of Claim 11 wherein receiving authentication data uniquely identifying the user comprises receiving a correct answer to a security question posed to the user, to which only the user authorized to receive the digital content knows the answer.

14. The method of Claim 11 wherein receiving authentication data uniquely identifying the user comprises receiving a security code generated by a secure token.

15. The method of Claim 11 wherein receiving authentication data uniquely identifying the user comprises receiving biometric data.

16. The method of Claim 15 wherein the biometric data comprises a digitized fingerprint scan.

17. The method of Claim 15 wherein biometric data comprises a digitized retinal scan.

18. The method of Claim 11 wherein the first communication channel (102, 108) comprises a broadband communication network.

19. The method of Claim 11 wherein the first communication channel comprises an TCP/IP packet switched network.

20. The method of Claim 11 wherein the second channel (104) comprises a wireless telephone network.

21. The method of Claim 20 wherein confirming the request comprises sending an SMS text message to the user over the wireless telephone network requesting confirmation of the request and receiving an SMS text message from the user confirming the request.

## Patentansprüche

1. Nichtabstreitbarkeitssystem zum Erleichtern der sicheren Bereitstellung von digitalen Inhalten an einen entfernten Benutzer über ein Netzwerk, wobei das System Folgendes umfasst:
einen Inhaltsserver (74, 98), der dazu ausgelegt ist, eine Anforderung für digitale Inhalte von dem Benutzer zu empfangen, und der dazu ausgelegt ist, um von dem Benutzer angeforderte digitale Inhalte an ein entferntes Gerät über das Netzwerk zu liefern;
eine Eingabevorrichtung (72, 92), die dazu ausgelegt ist, Benutzerauthentifizierungsdaten zu empfangen, die den Benutzer eindeutig identifizieren; und
einen Authentifizierungsserver (78, 94), der dazu ausgelegt ist, die Benutzerauthentifizierungsdaten von der Eingabevorrichtung zu empfangen, um die Identität des
Benutzers zu überprüfen und zu bestimmen, ob der Benutzer berechtigt ist, den angeforderten digitalen Inhalt zu empfangen, nach dem Überprüfen der Identität des Benutzers und dem Bestimmen, dass der Benutzer berechtigt ist, den angeforderten digitalen Inhalt zu
empfangen, wobei der Authentifizierungsserver dazu ausgelegt ist, eine Autorisierungsnachricht an den Inhaltsserver zu senden, um den Inhaltsserver anzuweisen, den angeforderten Inhalt an die entfernte Vorrichtung zu liefern,
wobei der Inhaltsserver dazu ausgelegt ist, eine Authentifizierungsanforderung an den Authentifizierungsserver als Reaktion auf das Empfangen der Anforderung für digitalen Inhalt von dem Benutzer zu senden, und der Authentifizierungsserver dazu ausgelegt ist, eine Eingabeaufforderung an die Eingabevorrichtung als Reaktion auf das Empfangen der Authentifizierungsanforderung von dem Inhaltsserver zu senden, wobei die Eingabeaufforderung den Benutzer auffordert, die Benutzerauthentifizierungsdaten einzugeben;
**dadurch gekennzeichnet, dass** die Autorisierungsnachricht die Identität des Benutzers, der den Inhalt anfordert, nicht offenbart, so dass der Authentifizierungsserver konfiguriert ist, die Identität des Benutzers gegenüber dem Inhaltsserver abzuschirmen, und
die Authentifizierungsanforderung den von dem Benutzer angeforderten Inhalt nicht identifiziert, so dass der Inhaltsserver dazu ausgelegt ist, den angeforderten digitalen Inhalt vor dem Authentifizierungsserver (78, 94) abzuschirmen.

2. Nichtabstreitbarkeitssystem nach Anspruch 1, ferner umfassend eine Serviceeinheit (88) zum Laden des Benutzers für die an die entfernte Vorrichtung gelieferten digitalen Inhalte.

3. Nichtabstreitbarkeitssystem nach Anspruch 2, wobei der Authentifizierungsserver (78, 94) dazu ausgelegt ist, die Identität des Benutzers an die Serviceeinheit (88) weiterzuleiten, und der Inhaltsserver (74, 98) dazu ausgelegt ist, eine Transaktionskennung, die dem an den Benutzer gelieferten Inhalt zugeordnet ist, an die Serviceeinheit weiterzuleiten, und die Serviceeinheit dazu ausgelegt ist, eine Rechnung zu Lasten des von dem Authentifizierungsserver identifizierten Benutzers für den digitalen Inhalt vorzubereiten, der der von dem Inhaltsserver bereitgestellten Transaktionskennung zugeordnet ist.

4. System nach Anspruch 1, wobei die Eingabevorrichtung, die zum Empfangen von Benutzerauthentifizierungsdaten eingerichtet ist, und die entfernte Vorrichtung, an die der Inhaltsanbieter digitale Inhalte liefert, eine kombinierte Eingabe-/Endvorrichtung (72, 92) umfasst.

5. System nach Anspruch 4, wobei die kombinierte Eingabe-/Endvorrichtung (72, 92) eines von einem Digitalempfänger zum Empfangen eines Breitband-Fernsehsignals, einem Mobiltelefon, einem drahtlosen E-Mail-Anschluss oder einem persönlichen digitalen Assistenten, umfasst.

6. System nach Anspruch 1, wobei die Benutzerauthentifizierungsdaten, die den Benutzer eindeutig identifizieren, einen Benutzernamen und ein Passwort umfassen.

7. System nach Anspruch 1, wobei die Benutzerauthentifizierungsdaten biometrische Daten umfassen.

8. System nach Anspruch 7, wobei die biometrischen Daten mindestens eines von einem Fingerabdruckscan oder einem Netzhautscan umfassen.

9. System nach Anspruch 1, wobei die Benutzerauthentifizierungsdaten einen eindeutigen Code umfassen, der den Benutzer identifiziert.

10. System nach Anspruch 9, wobei der eindeutige Code durch einen sicheren Token bereitgestellt ist.

11. Verfahren zum Aufzeichnen einer Netzwerktransaktion, bei der digitale Inhalte, die von einem Benutzer angefordert werden, an ein von dem Benutzer benanntes Endgerät (72, 92) geliefert werden, so dass die Anforderung des Benutzers von dem Benutzer nicht abgelehnt werden kann, wobei das Verfahren Folgendes umfasst:
Empfangen einer Anforderung nach Inhalten von dem Benutzer an einem Inhaltsserver (98), der dazu ausgelegt ist, dem Benutzer digitale Inhalte zu liefern;
als Reaktion auf das Empfangen der Anforderung für Inhalte, Senden einer Authentifizierungsanforderung von dem Inhaltsserver an einen Authentifizierungsserver;
als Reaktion auf das Empfangen der Authentifizierungsanforderung Senden einer Eingabeanforderung von dem Authentifizierungsserver an eine Eingabevorrichtung, wobei der Benutzer aufgefordert wird, Authentifizierungsdaten einzugeben, die den Benutzer eindeutig identifizieren;
Empfangen der Authentifizierungsdaten auf dem Authentifizierungsserver, die den Benutzer über einen ersten Kommunikationskanal (102, 108) eindeutig identifizieren;
Verifizieren auf dem Authentifizierungsserver (78, 94), dass der Benutzer berechtigt ist, den angeforderten digitalen Inhalt basierend auf den empfangenen Authentifizierungsdaten zu empfangen;
Bestätigen der Anforderung mit dem Benutzer über einen zweiten Kommunikationskanal (104);
als Reaktion auf die Überprüfung, ob der Benutzer berechtigt ist, die digitalen Inhalte zu empfangen, Senden einer Autorisierungsnachricht an den Inhaltsserver, um den Inhaltsserver anzuweisen, die angeforderten digitalen Inhalte über das Netzwerk an das von dem Benutzer angegebene Endgerät zu liefern;
**dadurch gekennzeichnet, dass**:
die Autorisierungsnachricht nicht die Identität des Benutzers offenbart, der den Inhalt anfordert, so dass der Authentifizierungsserver die Identität des Benutzers vor dem Inhaltsserver (98) abschirmt; und
die Authentifizierungsanforderung den von dem Benutzer angeforderten Inhalt nicht identifiziert, so dass der Inhaltsserver den angeforderten digitalen Inhalt vor dem Authentifizierungsserver (78, 94) abschirmt.

12. Verfahren nach Anspruch 11, wobei das Empfangen von Authentifizierungsdaten, die den Benutzer eindeutig identifizieren, das Empfangen eines Benutzernamens und eines Passworts umfasst.

13. Verfahren nach Anspruch 11, wobei das Empfangen von Authentifizierungsdaten, die den Benutzer eindeutig identifizieren, das Empfangen einer korrekten Antwort auf eine Sicherheitsfrage an den Benutzer umfasst, auf die nur der zum Empfangen des digitalen Inhalts berechtigte Benutzer die Antwort kennt.

14. Verfahren nach Anspruch 11, wobei das Empfangen von Authentifizierungsdaten, die den Benutzer eindeutig identifizieren, das Empfangen eines Sicherheitscodes umfasst, der durch ein sicheres Token erzeugt wird.

15. Verfahren nach Anspruch 11, wobei das Empfangen von Authentifizierungsdaten, die den Benutzer eindeutig identifizieren, das Empfangen biometrischer Daten umfasst.

16. Verfahren nach Anspruch 15, wobei die biometrischen Daten einen digitalisierten Fingerabdruckscan umfassen.

17. Verfahren nach Anspruch 15, wobei biometrische Daten einen digitalisierten Retinascan umfassen.

18. Verfahren nach Anspruch 11, wobei der erste Kommunikationskanal (102, 108) ein Breitbandkommunikationsnetzwerk umfasst.

19. Verfahren nach Anspruch 11, wobei der erste Kommunikationskanal ein TCP/IP paketvermitteltes Netzwerk umfasst.

20. Verfahren nach Anspruch 11, wobei der zweite Kanal (104) ein drahtloses Telefonnetz umfasst.

21. Verfahren nach Anspruch 20, wobei das Bestätigen der Anforderung das Senden einer SMS-Textnachricht an den Benutzer über das drahtlose Telefonnetz umfasst, das die Bestätigung der Anforderung anfordert und eine SMS-Textnachricht von dem Benutzer empfängt, der die Anforderung bestätigt.

## Revendications

1. Système de non-répudiation pour faciliter la distribution sécurisée de contenu numérique à un utilisateur distant sur un réseau, le système comprenant :
un serveur de contenu (74, 98) adapté pour recevoir une demande de contenu numérique à partir de l'utilisateur et adapté pour distribuer un contenu numérique demandé par l'utilisateur à un dispositif distant sur le réseau ;
un dispositif d'entrée (72, 92) adapté pour recevoir des données d'authentification d'utilisateur identifiant uniquement l'utilisateur ; et
un serveur d'authentification (78, 94) adapté pour recevoir les données d'authentification d'utilisateur à partir du dispositif d'entrée pour vérifier l'identité de l'utilisateur et déterminer si l'utilisateur est autorisé à recevoir le contenu numérique demandé, après vérification de l'identité de l'utilisateur et détermination du fait que l'utilisateur est autorisé à recevoir le contenu numérique demandé, le serveur d'authentification étant adapté pour envoyer un message d'autorisation au serveur de contenu afin de donner une instruction au serveur de contenu de distribuer le contenu demandé au dispositif distant,
dans lequel le serveur de contenu est adapté pour envoyer une demande d'authentification au serveur d'authentification en réponse à la réception de la demande de contenu numérique à partir de l'utilisateur, et le serveur d'authentification est adapté pour envoyer une demande d'entrée au dispositif d'entrée en réponse à la réception de la demande d'authentification à partir du serveur de contenu, la demande d'entrée invitant l'utilisateur à introduire les données d'authentification d'utilisateur ;
**caractérisé en ce que** le message d'autorisation ne divulgue pas l'identité de l'utilisateur demandant le contenu de sorte que le serveur d'authentification soit configuré pour protéger l'identité de l'utilisateur du serveur de contenu, et
la demande d'authentification n'identifie pas le contenu demandé par l'utilisateur de sorte que le serveur de contenu soit adapté pour protéger le contenu numérique demandé du serveur d'authentification (78, 94).

2. Système de non-répudiation de la revendication 1, comprenant en outre une unité de service (88) pour facturer à l'utilisateur le contenu numérique distribué au dispositif distant.

3. Système de non-répudiation de la revendication 2, dans lequel le serveur d'authentification (78, 94) est adapté pour transférer l'identité de l'utilisateur à l'unité de service (88), et le serveur de contenu (74, 98) est adapté pour transférer un identifiant de transaction associé au contenu distribué à l'utilisateur à l'unité de service, et l'unité de service est adaptée pour préparer une facture facturant à l'utilisateur identifié par le serveur d'authentification le contenu numérique associé à l'identifiant de transaction fourni par le serveur de contenu.

4. Système de la revendication 1, dans lequel le dispositif d'entrée adapté pour recevoir des données d'authentification d'utilisateur et le dispositif distant auquel le fournisseur de contenu distribue un contenu numérique comprennent un dispositif d'entrée/terminal combiné (72, 92).

5. Système de la revendication 4, dans lequel le dispositif d'entrée/terminal combiné (72, 92) comprend l'un d'un boîtier décodeur pour recevoir un signal de télévision à large bande, d'un téléphone mobile ; d'un terminal de courrier électronique sans fil ; et d'un assistant numérique personnel.

6. Système de la revendication 1, dans lequel les données d'authentification d'utilisateur identifiant uniquement l'utilisateur comprennent un nom d'utilisateur et un mot de passe.

7. Système de la revendication 1, dans lequel les données d'authentification d'utilisateur comprennent des données biométriques.

8. Système de la revendication 7, dans lequel les données biométriques comprennent au moins l'un d'un balayage d'empreinte digitale et d'un balayage rétinien.

9. Système de la revendication 1, dans lequel les données d'authentification d'utilisateur comprennent un code unique identifiant l'utilisateur.

10. Système de la revendication 9, dans lequel le code unique est fourni par un jeton sécurisé.

11. Procédé d'enregistrement d'une transaction de réseau où un contenu numérique demandé par un utilisateur est distribué à un dispositif terminal (72, 92) désigné par l'utilisateur de sorte que la demande de l'utilisateur ne puisse pas être répudiée par l'utilisateur, le procédé comprenant le fait :
de recevoir, au niveau d'un serveur de contenu (98) adapté pour distribuer un contenu numérique à l'utilisateur, une demande de contenu à partir de l'utilisateur ;
en réponse à la réception de la demande de contenu, d'envoyer une demande d'authentification du serveur de contenu à un serveur d'authentification ;
en réponse à la réception de la demande d'authentification, d'envoyer une demande d'entrée du serveur d'authentification à un dispositif d'entrée, invitant l'utilisateur à introduire des données d'authentification identifiant uniquement l'utilisateur ;
de recevoir au niveau du serveur d'authentification les données d'authentification identifiant uniquement l'utilisateur sur un premier canal de communication (102, 108) ;
de vérifier au niveau du serveur d'authentification (78, 94) que l'utilisateur est autorisé à recevoir le contenu numérique demandé sur la base des données d'authentification reçues ;
de confirmer la demande avec l'utilisateur sur un deuxième canal de communication (104) ;
en réponse à la vérification du fait que l'utilisateur est autorisé à recevoir le contenu numérique, d'envoyer un message d'autorisation au serveur de contenu pour donner une instruction au serveur de contenu de distribuer le contenu numérique demandé sur le réseau au dispositif terminal désigné par l'utilisateur ;
**caractérisé en ce que** :
le message d'autorisation ne divulgue pas l'identité de l'utilisateur demandant le contenu de sorte que le serveur d'authentification protège l'identité de l'utilisateur du serveur de contenu (98) ; et
la demande d'authentification n'identifie pas le contenu demandé par l'utilisateur, de sorte que le serveur de contenu protège le contenu numérique demandé du serveur d'authentification (78, 94).

12. Procédé de la revendication 11, dans lequel la réception de données d'authentification identifiant uniquement l'utilisateur comprend le fait de recevoir un nom d'utilisateur et un mot de passe.

13. Procédé de la revendication 11, dans lequel la réception de données d'authentification identifiant uniquement l'utilisateur comprend le fait de recevoir une réponse correcte à une question de sécurité posée à l'utilisateur, à laquelle seul l'utilisateur autorisé à recevoir le contenu numérique connaît la réponse.

14. Procédé de la revendication 11, dans lequel la réception de données d'authentification identifiant uniquement l'utilisateur comprend le fait de recevoir un code de sécurité généré par un jeton sécurisé.

15. Procédé de la revendication 11, dans lequel la réception de données d'authentification identifiant uniquement l'utilisateur comprend le fait de recevoir des données biométriques.

16. Procédé de la revendication 15, dans lequel les données biométriques comprennent un balayage d'empreinte digitale numérisé.

17. Procédé de la revendication 15, dans lequel les données biométriques comprennent un balayage rétinien numérisé.

18. Procédé de la revendication 11, dans lequel le premier canal de communication (102, 108) comprend un réseau de communication à large bande.

19. Procédé de la revendication 11, dans lequel le premier canal de communication comprend un réseau à commutation de paquets TCP/IP.

20. Procédé de la revendication 11, dans lequel le deuxième canal (104) comprend un réseau téléphonique sans fil.

21. Procédé de la revendication 20, dans lequel la confirmation de la demande comprend le fait d'envoyer un message texte SMS à l'utilisateur sur le réseau téléphonique sans fil demandant une confirmation de la demande et de recevoir un message texte SMS à partir de l'utilisateur confirmant la demande.
